# EUROPÄISCHE PATENTANMELDUNG

(11) **EP 0 601 412 A1**
(43) Veröffentlichungstag der Anmeldung: **15.06.1994**
(21) Anmeldenummer: 93119075.5
(22) Anmeldetag: 26.11.1993
(51) Int. Cl.: B32B 17/10, E06B 3/66, E04B 1/00, A01G 9/14, C03C 17/23, G02B 5/22

(54) **Bauwerk mit transparenten Hüllflächen**

(30) Priorität: 07.12.1992 DE 4241125
(71) Anmelder: Kunert, Heinz, Dr., D-50935 Köln (DE)
(72) Erfinder: Kunert, Heinz, Dr., D-50935 Köln (DE)
(74) Vertreter: Geitz, Heinrich, Dr.-Ing.

(57) **Zusammenfassung**

Bei einem insbesondere als Glasvorbau ausgebildeten Bauwerk (10) sind die transparenten Hüllflächen mit vornehmlich die nicht sichtbaren spektralen Anteile einfallender Solarenergie selektiv absorbierenden und in langwellige Wärmestrahlung umwandelnden Filtern (22) ausgerüstet, die im wesentlichen ungehindert von den sichtbaren Anteilen der Solarstrahlung durchdrungen werden können. Auf einer Seite können die Hüllflächen mit einer die Emission von Wärmestrahlung mindernden Schicht (23) versehen sein und bei den absorptiven Filtern kann es sich um Scheiben aus Glas oder Kunststoff handeln, die im Kern eingefärbt sind und von den sichtbaren Anteilen der Solarenergie im wesentlichen ungehindert durchstrahlt werden. Bei einer bevorzugten Ausführungsform sind die transparenten Hüllflächen (18,19) als Wandelemente ausgebildet und mithin wahlweise mit ihrer einen oder anderen Seite zum umschlossenen Raum bzw. nach außen weisend einstellbar.

## Beschreibung

Als Bauwerke mit großflächigen und vielfach überwiegend transparenten Hüllflächen sind vornehmlich Wintergärten und Sonnenveranden zu benennen, zum Beispiel aber auch Treibhäuser.

Bei den Wintergärten und Sonnenveranden handelt es sich in aller Regel um einer Gebäudewand anliegende Glasvorbauten mit in sich abgeschlossenen Räumen, die mit dahinterliegenden Räumen des Gebäudes in Wechselbeziehungen stehen. Nicht transparente Hüllflächen bilden bei diesen Glasvorbauten die anliegenden Gebäudewände und der Boden. Treibhäuser hingegen haben lediglich den Boden als nicht transparente Hüllfläche.

Charakteristisch für derartige Bauwerke mit transparenten Hüllflächen ist, daß je nach Einstrahlrichtung der einfallenden Solarenergie letztere durch eine transparente Hüllfläche in das Bauwerk ein und durch eine gegenüberliegende Hüllfläche direkt oder von im Raum liegenden Flächen reflektiert allseitig wieder austritt. Derartige Bauwerke werden also weitgehend vom Sonnenlicht durchstrahlt.

Glasvorbauten erfreuen sich insbesondere in jüngerer Zeit steigender Beliebtheit. Dies dürfte einerseits auf dem Erlebnis eines klimageschützten Aufenthalts mit ungehinderter Sicht auf die umgebende Umwelt und andererseits auf dem Bedürfnis nach Sonnenlicht und Sonnenwärme beruhen.

Glasvorbauten gelten als thermische Pufferräume für die anliegenden Gebäude oder auch als passiv erwärmte Sonnenkollektoren, deren Wärmeenergie über Raumluftkonvektion in die anliegenden Wohnräume gelangt. Es hat sich jedoch gezeigt, daß der thermische Nutzen derartiger Glasvorbauten bei weitem nicht den gehegten Erwartungen der Bauphysik entspricht.

Messungen an Versuchsbauten haben bei den integrierten Gebäuden günstigstenfalls Einsparungen an Heizungsenergie bis zu 15 % erbracht. Es wurden aber auch Fälle negativer Wärmebilanz festgestellt, bei denen sich der Nutzen von Glasvorbauten, die zur Kompensation winterlicher Wärmeverluste errichtet worden waren, im zusätzlichen Raumgewinn und dem naturverbundenen Wohnerlebnis erschöpft.

Als nachteilig hat sich generell die nur eingeschränkte Bewohnbarkeit von Räumen mit großflächigen oder überwiegenden transparenten Hüllflächen erwiesen. Um solche glasumhüllten Räume in den Sommermonaten bewohnbar zu gestalten, sind in der Regel Sonnenschutz- und Belüftungseinrichtungen erforderlich. In der Winterzeit hingegen, und vielfach auch in den Übergangszeiten, bedarf es selbst bei Verwendung hochdämmender Isolierglasscheiben mit Wärmedurchgangswerten von beispielsweise k ≦ 1,2 W/qmK der Wärmezufuhr mittels zusätzlicher Heizungseinrichtungen.

Angesichts dieser Unzulänglichkeiten des Standes der Technik besteht die der Erfindung zugrundeliegende Aufgabe darin, Bauwerke mit großflächigen bzw. überwiegend transparenten Hüllflächen, wie Wintergärten oder sonstige Glasvorbauten, aber auch Glashäuser, ohne Eingriff in die architektonischen Erscheinungsbilder in den Übergangszeiten und insbesondere im Winter durch effiziente Umsetzung einfallender solarer Strahlungsenergie angenehm bewohnbar zu gestalten. Gemäß der Erfindung sollen somit Glasvorbauten energieoptimiert und so gestaltet werden, daß sie effiziente Einrichtungen zur Gewinnung solarer Strahlungsenergie und deren thermischer Umsetzung in etwaig anliegenden Räumen bilden.

Gelöst ist diese Aufgabe dadurch, daß bei einem Bauwerk mit einem zumindest teilweise von transparenten Hüllflächen umgebenen Raum, insbesondere bei einem Glasvorbau in Form eines Wintergartens, einer Sonnenveranda oder dergleichen, die transparenten Hüllflächen mit vornehmlich die nicht sichtbaren spektralen Anteile einfallender Solarenergie selektiv absorbierenden und in langwellige Wärmestrahlung umwandelnden Filtern ausgerüstet sind, welche die sichtbaren Anteile der Solarstrahlung weitgehend ungehindert passieren lassen.

Bei der Erfindung handelt es sich mithin darum, insbesondere die nicht sichtbaren Anteile der auf einen Baukörper auftreffenden kurzwelligen Sonnenstrahlung unmittelbar beim Durchstrahlen der transparenten Hüllfläche mittels selektiv absorptiver Filter im Hüllkörper in langwellige Wärmestrahlung zu verwandeln. Für die in Form langwelliger Wärmestrahlung in den Raum einfallende solare Energiestrahlung sind die raumeinhüllenden transparenten Flächen annähernd opak. Wenn die gesamte transparente Hüllfläche eines Glasvorbaus mit absorptiven Filtern ausgerüstet ist, wird eine fast vollständige Absorption der nicht sichtbaren Anteile der einfallenden Solarenergie erreicht. Insbesondere ist dies bei Glasvorbauten mit zweimaliger Filter-Passage der Sonneneinstrahlung beim Durchscheinen des Baukörpers der Fall.

Da Glas für langwellige Wärmestrahlung opak ist, verbleibt bei solarer Durchstrahlung derartiger Glasvorbauten fast 50 % der solaren Energie im transparent umhüllten Raum. Insbesondere ist dies der Fall, wenn gemäß einer Weiterbildung die transparenten Hüllflächen auf der nach außen weisenden Seite mit einer die Emission von Wärmestrahlung mindernden Schicht ausgerüstet sind.

Eine derartige Schicht, die für das solare Spektrum transparent ist, bewirkt in thermischer Hinsicht einen zweifachen Nutzen. Einerseits mindert sie die Abstrahlung der bei der solaren Durchstrahlung der transparenten Hüllfläche absorbierten Wärmeenergie nach außen und andererseits erhöht sie generell den Wärmewiderstand der Glas-Hüllflächen des Baukörpers.

Bei der die Emission von Wärmestrahlung mindernden Schicht kann es sich mit Vorteil um eine Zinnoxidschicht handeln, die pyrolytisch auf die transparenten Hüllflächen aufgebracht ist.

Solche Schichten werden wegen ihrer hervorragenden Kratzfestigkeit und Alterungsbeständigkeit bevorzugt auf zur Außenatmosphäre ungeschützte Oberflächen aufgebracht. Bei gegen Abrieb geschützten Schichten, wie dem Scheibeninnenraum von Isoliergläsern zugewandten Schichten, können hingegen weniger beständige, im Vakuum aufgedampfte Halbleiter- oder Metallbeschichtungen mit induzierter Transmission im sichtbaren Spektralbereich, oder auch strukturelle Beschichtungen aus organischer Substanz verwendet werden, die gegenüber pyrolytisch aufgebrachten Zinnoxid-Schichten in der Regel einen niedrigeren Emissionsgrad aufweisen.

Im Rahmen der Erfindung können die absorptiven Filter insbesondere als Scheiben aus Glas oder Kunststoff ausgebildet sein, die im Kern eingefärbt bzw. mit selektiv absorptiven Substanzen angereichert sind und von den sichtbaren spektralen Anteilen der Solarenergie im wesentlichen ungehindert durchstrahlt werden. Bei den absorptiven Filtern kann es sich aber auch um selektiv wirkende Beschichtungen aus anorganischem oder organischem Material handeln, die auf den zum umschlossenen Raum hinweisenden Seiten der transparenten Hüllflächen aufgebracht sind.

Die transparenten Hüllflächen können im Rahmen der Erfindung auch als Verbundelemente mit wenigstens zwei mittels einer Klebefolie miteinander flächenhaft verbundenen Scheiben ausgebildet sein. Zweckmäßigerweise handelt es sich bei einer dieser Scheiben um eine absorptiv wirkende Filterplatte und die andere Scheibe ist auf der von der Filterplatte abgewandten Seite mit der die Emission von Wärmestrahlung mindernden Schicht ausgerüstet.

Alternativ zum Aufbau der Hüllflächen als Verbundelemente mit einer absorptiv wirkenden Filterplatte kann auch die Klebeschicht zwischen den beiden Scheiben als selektive, im nicht sichtbaren Bereich der Sonnenstrahlung absorbierende Filterschicht ausgebildet sein. Dabei können in die Klebefolie selektiv absorptive anorganische oder organische Pigmente eingebettet sein, oder bei der Klebefolie kann es sich um einen Folienverbund mit einer einliegenden, eingebettete anorganische oder organische Pigmente enthaltenden Filterfolie handeln.

Als insbesondere vorteilhaft hat sich erwiesen, wenn im Hinblick auf die großflächigen transparenten Hüllflächen von Glashäusern und Glasvorbauten diese Hüllflächen aus hoch wärmedämmenden Zwei- oder MehrscheibenIsolierglaselementen bestehen. Zweckmäßigerweise sind dabei die zu dem umschlossenen Raum hinweisenden Scheiben als absorptive Filterplatten ausgebildet, während die jeweils anderen Scheiben aus für Sonnenstrahlen hochtransparentem Material bestehen sollten.

Sofern es sich bei den Scheiben aus für Sonnenstrahlen hochtransparentem Material um Glasscheiben handelt, hat sich gemäß einer Weiterbildung der Erfindung die Verwendung von Weißglas als besonders vorteilhaft erwiesen, weil Weißglas eine höhere Transparenz für das Sonnenspektrum als herkömmliches Fensterglas aufweist.

Bei Weißglas handelt es sich um ein extrem an Eisenoxid armes Glas, das im sichtbaren Bereich des solaren Strahlungsspektrums ein kaum merkliches Ansteigen der Transparenz bewirkt, hingegen aber im nicht sichtbaren, kurzwelligen Infrarot-Spektralbereich die Durchlässigkeit der solaren Energiestrahlung um annähernd zehn Prozent erhöht. Derartiges Weißglas fand bisher nur als Deckglas von Sonnenkollektoren Verwendung.

Bei Bauwerken mit transparenten Hüllflächen war man bisher weit davon entfernt, den Nutzen solcher Spezialgläser zu erkennen, da sie zur Erhöhung der Lichttransparenz einen nur marginalen Beitrag leisten, dagegen aber in den Sommermonaten zu einer Anhebung des bereits übermäßigen, ohne Sonnenschutzmaßnahmen kaum erträglichen Eintrags von Strahlungsenergie führen können.

Eine zweischeibige hochisolierende Wärmeverglasung verhilft einem glasumhüllten Raum zu beachtlichen Wärmegewinnen. Dies ist sowohl in den Übergangsjahreszeiten als auch in den Wintermonaten für die Bewohnbarkeit von erheblichem Nutzen. Im Sommer hingegen, wenn bei starker Sonneneinstrahlung glasumhüllte Räume infolge übermäßiger Erwärmung leicht unbewohnbar werden können, bedarf es eines wirksamen Sonnenschutzes, der üblicherweise mittels sogenannter Sonnenrollos verwirklicht wird.

Eine andere wichtige Weiterbildung der Erfindung sieht vor, daß die Hüllflächen vom Boden aufsteigend nach außen geneigt sind. Der Neigungswinkel gegenüber einer Vertikalen soll dabei kleiner als 30° betragen und vorzugsweise zwischen 10° und 15° liegen.

Eine derartige Maßnahme hat sich insofern als besonders vorteilhaft erwiesen, als bei sommerlicher Sonneneinstrahlung ein großer Teil der gerichteten, steil auftreffenden Sonnenstrahlung weitgehend durch Totalreflektion abgewiesen wird. Unter winterlichen Verhältnissen erhält man hingegen wegen des niedrigen Sonneneinfallwinkels eine weitgehende volle Einstrahlung der gerichteten Sonnenenergiestrahlung. Auch erhält man dann durch Reflektion an der Bodenfläche vornehmlich bei Schneelagen eine Erhöhung der diffusen Einstrahlung.

Bei zur Bodenfläche geneigten Scheiben sind auch die durch Abstrahlung bedingten Wärmeverluste des Raumes geringer. In Anbetracht der Halbraumabstrahlung treten in größerem Ausmaß die Flächen des Erdbodens und die umliegender Gebäude oder umliegenden Bewuchses als Strahlungspartner der Scheiben in Erscheinung. Dabei handelt es sich um Strahlungspartner, die eine ungleich höhere Strahlungstemperatur aufweisen als das extrem kalte Firmament.

Auch gegenüber winterlicher Außenluft haben die Bodenflächen und die Flächen umliegender Gebäude infolge der Sonneneinstrahlung tagsüber und infolge deren Speicherungsvermögen auch nachtsüber in der Regel ein höheres Temperaturniveau. Dies gilt auch für winterliche Schneelagen.

Ein weiterer wichtiger Vorteil der Erfindung liegt nun darin, daß nach einer nochmaligen Ausgestaltung die transparenten Hüllflächen als Wendeelemente ausgebildet und wahlweise mit ihrer einen oder anderen Seite zum umschlossenen Raum bzw. nach außen weisend einstellbar sind.

Diese Ausbildung der Hüllflächen als Wendeelemente ermöglicht mithin in den Jahreszeiten, in denen es keiner Umwandlung von Solarenergie in Wärme bedarf, einen von transparenten Hüllflächen umgebenen Baukörper vor übermäßiger Sonneneinstrahlung zu schützen, indem die Hüllflächen so gewendet werden, daß die in den Übergangszeiten und im Winter innenliegenden Seiten nach außen, also zur Umgebung weisen.

Angesichts der einseitigen Ausrüstung einer selektiven, vornehmlich das nicht sichtbare solare Spektrum absorbierenden Filterscheibe mit einer für kurzwellige Solarstrahlung transparenten, dagegen für langwellige Wärmestrahlung emissionsmindernden Beschichtung erhält die Scheibe bei einer um 180° gegenüber Winterbetrieb gewendeten Stellung die Funktion eines Sonnenschutzglases. Die emissionsmindernde Beschichtung ist nach dem Wenden der Scheibe auf der zur Einstrahlrichtung der Sonne rückwärtigen Seite der Filterscheibe positioniert, also auf der zum umschlossenen Raum hinweisenden Seite. Der nicht sichtbare Anteil der einfallenden Sonnenstrahlung wird wiederum, wie im Winterbetrieb, von der Filterscheibe absorbiert. Die in der Filterscheibe entstehende Wärmeenergie wird aber wegen der zum Raum positionierten emissionsmindernden Schicht dann vornehmlich nach außen abgestrahlt.

Bei der Verwendung zweischichtiger Isoliergläser für die Hüllflächen von Glasbauten wird dieser Effekt naturgemäß erheblich verstärkt, und zwar deshalb, weil die zwischen den Scheiben eingeschlossene Luft- oder Gasschicht eine thermische Barriere für Wärmeübergänge über Konvektion und Wärmeleitung bildet, ohne die spezifischen energetischen Strahlungsfunktionen zu tangieren. Die thermische Dämmfunktion eines Isolierglaseelements hat sich daher sowohl für die Winterals auch die Sommerposition der Scheibe als höchst vorteilhaft erwiesen.

Anhand der beigefügten Zeichnung sollen nachstehend eine Ausführungsform eines erfindungsgemäßen Bauwerks mit transparenten Hüllflächen sowie verschiedene Ausbildungsmöglichkeiten dieser Hüllflächen erläutert werden. In schematischen Ansichten zeigen:
- Fig. 1: einen an ein festes Bauwerk angelehnten und als Glasvorbau mit transparenten Hüllflächen ausgebildeten Wintergarten,
- Fig. 2: ein monolithisches transparentes Plattenelement mit einem zweischichtigen Belag,
- Fig. 3: ein transparentes Hüllelement in Form einer monolithischen Farb-Filterscheibe in Glas- oder Kunststoffausführung mit einer die Emission von Wärmestrahlung mindernden Schicht,
- Fig. 4: ein transparentes Hüllelement in Form eines farblosen Fenster- oder Floatglases mit einer selektiven Filterschicht auf der einen und einer die Emission von Wärmestrahlung mindernden Schicht auf der anderen Seite,
- Fig. 5: ein als Verbundelement mit zwei mittels einer Klebefolie miteinander verbundenen farblosen Glasscheiben aufgebautes transparentes Hüllelement,
- Fig. 6: ein ebenfalls als Verbundelement ausgebildetes Hüllelement, wobei die eine Scheibe als Filterscheibe ausgebildet ist, und
- Fig. 7: ein als Isolierelement mit zwei beabstandeten Scheiben ausgebildetes Hüllelement.

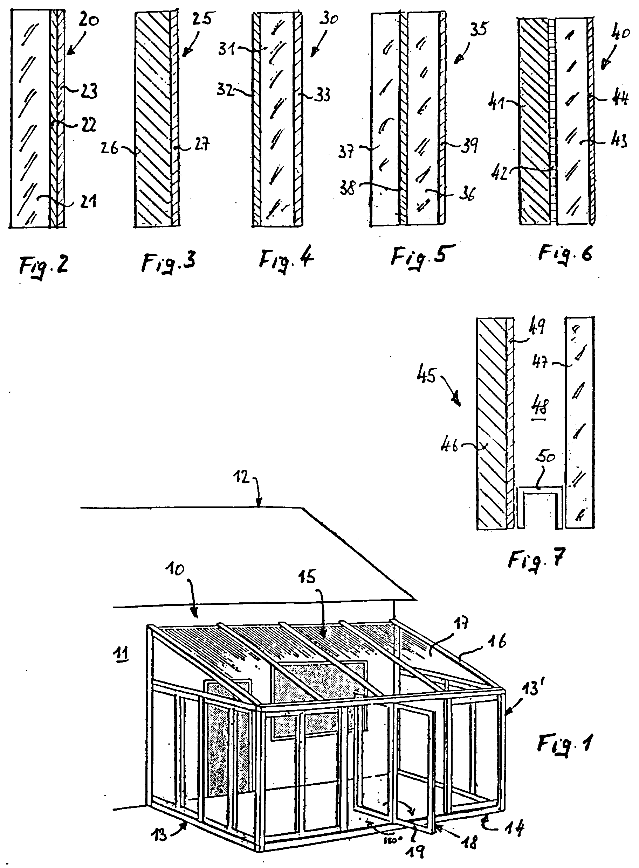

Bei dem in Fig. 1 veranschaulichten Wintergarten 10 handelt es sich um einen an einer Wand 11 eines festen Bauwerks 12 anliegenden Glasvorbau mit einem hier nicht weiter interessierenden Rahmenwerk und in diesem aufgenommenen transparenten Hüllflächen. Der Glasvorbau umfaßt je zwei sich rechtwinklig von der Wand 11 des Bauwerks 12 forterstreckende Seitenwände 13, 13' und eine beabstandet von dieser Bauwerkswand verlaufende Längswand 14, ferner eine von der Bauwerkswand 11 zu der Längswand 14 des Wintergartens hin geneigt verlaufende Dachfläche 15. Die Dachfläche besteht aus mehreren parallel zueinander beabstandet verlaufenden Dachträgern 16, zwischen denen jeweils ein den oberseitigen Abschluß des von dem Glasvorbau eingeschlossenen Raumes vermittelndes Hüllelement 17 aufgenommen ist. Die Seitenwände 13, 13' und die sich parallel zur Bauwerkswand 11 erstreckende Längswand 14 sind gebildet aus jeweils um eine Hochachse um 180° zwischen einer Sommer- und einer Winterposition verschwenkbaren Flügelelementen 18, die innerhalb der Elementrahmen 19 nachstehend noch im einzelnen zu erläuternde transparente Hüllelemente aufnehmen.

Bei dem in Fig. 2 veranschaulichten Hüllelement handelt es sich um ein monolithisches Plattenelement 20 mit einer transparenten Scheibe 21 und einem zweischichtigen Belag mit den Schichten 22, 23. Die der Scheibe direkt angelagerte Beschichtung 22 erfüllt eine selektive Absorptionsfunktion, während die zweite Schicht, welche die absorptive Schicht abdeckt, als Low-E-Beschichtung ausgebildet ist und die Abstrahlung der durch die selektive Absorbierschicht 22 gewonnenen Wärmeenergie nach außen mindert.

Bei derartigen Plattenelementen mit zweischichtigem Belag ist zu beachten, daß der Belag stets so auf dem Plattenelement aufgebracht werden muß, daß die Low-E-Beschichtung 23 die unmittelbar auf die Scheibe 21 aufgebrachte Absorptionsschicht 22 bedeckt.

Das Hüllelement 25 gemäß Fig. 3 ist als monolithische Farb-Filterscheibe 26 mit einer die Emission von Wärmestrahlung mindernden Low-E-Beschichtung 27 auf der einen Seite ausgebildet. Bei der monolithischen Farb-Filterscheibe kann es sich um eine Glasscheibe aus vorgespanntem oder teilvorgespanntem Glas handeln, aber auch um eine Kunststoffscheibe. Im Falle der ungeschützten Beaufschlagung monolithischer Glasscheiben empfehlen sich sogenannte Hard-Coverschichten, bei denen es sich um pyrolytisch auf Floatglas aufgebrachte Schichten auf Zinnoxidbasis handelt.

Das in Fig. 4 veranschaulichte Hüllelement 30 besitzt eine Scheibe 31 aus Weißglas hoher Transparenz mit extrem geringen Anteilen von Eisenoxiden. Auf der einen Seite ist dieses Hüllelement mit einer selektiven, im nicht sichtbaren Bereich der Sonnenstrahlung überproportional absorbierenden Filterschicht 32 ausgerüstet, die aus anorganischen oder organischen Substanzen besteht. Die andere Seite der Glasscheibe ist in ähnlicher Weise wie bei dem Hüllelement nach Fig. 3 mit einer Low-E-Beschichtung 33 versehen, welche die Emission von Wärmestrahlung reduziert.

Anstelle der Verwendung einer Weißglasscheibe 31 kann auch eine transparente Kunststoffplatte eingesetzt werden, die dann mit entsprechend wirkenden Pigmenten ausgerüstet sein kann. Bei der Verwendung einer so ausgerüsteten transparenten Kunststoffplatte entfällt dann die in nicht sichtbaren Bereichen der Sonnenstrahlung absorbierende selektive Filterschicht und die Beschichtung der anderen Seite der Scheibe kann als Halbleiter- oder Edelmetallschicht ausgebildet sein, und zwar vorzugsweise mit einer extrem dünnen Schutzschicht aus einem für Wärmestrahlen durchlässigen Kunststoff-Film.

Das in Fig. 5 veranschaulichte Verbundelement 35 besteht aus zwei farblosen Glasscheiben 36, 37, die mittels einer als Filterschicht ausgebildeten Verbund-Klebefolie 38 miteinander verbunden sind. Zu diesem Zweck sind in die Verbund-Klebefolie selektiv absorptive anorganische oder organische Pigmente eingebettet. Alternativ dazu kann es sich bei der Klebefolie jedoch auch um einen Folienverbund mit einer einliegenden Filterfolie handeln, in die anorganische oder organische Pigmente eingebettet sind. Auf der von der Klebefolie abgewandten Seite ist die Scheibe 36 mit einer Low-E-Beschichtung 39 versehen.

Das Verbundelement 40 gemäß Fig. 6 besitzt eine als Farb-Filter 41 ausgebildete Glas- oder Kunststoffscheibe der oben in Verbindung mit Fig. 3 beschriebenen Art, die mittels einer PVB- oder PU-Klebefolie 42 mit einer Scheibe 43 aus Weißglas flächenhaft verbunden ist. Auf der anderen Seite der Weißglasscheibe befindet sich wiederum eine Low-E-Beschichtung 44, wie sie vorstehend in Verbindung mit den Fig. 2 bis 5 bereits behandelt wurde.

Bei dem Hüllelement 45 nach Fig. 7 handelt es sich um ein Isolierglaselement mit zwei im Abstand voneinander angeordneten Scheiben 46, 47 und einer Edelgasfüllung im Scheiben-Zwischenraum 48. Die eine Außenscheibe ist wiederum, wie bei den Ausführungsformen nach den Fig. 3 und 6, als Farb-Filter in Form einer Glas- oder Kunststoffscheibe 46 ausgebildet, die auf der zum Scheiben-Zwischenraum hinweisenden Seite mit einer Low-E-Beschichtung 49 versehen ist. Die andere Scheibe 47 hingegen ist als Weißglasscheibe ausgebildet und in der durch das Zwischenprofil 50 angedeuteten Weise auf Abstand von der anderen Scheibe gehalten.

Die vorstehend in Verbindung mit den Fig. 2 bis 7 erläuterten Plattenelemente können einzeln verwendet werden, lassen sich aber auch kombinieren, so beispielsweise bei Verbundscheiben oder Isolierglasscheiben. In jedem Falle ist zu beachten, daß stets die Low-E-Schicht zur umgebenden Atmosphäre hin offen bleibt, also sozusagen den Abschluß oder die unbedeckte Oberfläche eines monolithischen Plattenelementes bildet. Eine Ausnahme davon ist nur zulässig, wenn diese Schicht möglicherweise von einer Schutzschicht bedeckt wird, die wie Luft oder Edelgas vor Wärmestrahlung im Wellenbereich von 2,5 µm bis 15 µm durchlässig ist. Dies ist beispielsweise für gewisse relativ verschleißfeste Kunststoffmaterialien, wie Polyvenylchlorid, bei einer Schichtdicke unter 50 µm der Fall.

In Fig. 1 ist im Bereich der Längswand 14 des Wintergartens 10 eines der um eine Hochachse um 180° zwischen einer Winter- und einer Sommerposition verschwenkbares Fensterelement 18 in Offenstellung gezeigt. In der Winterstellung sind die Schwenkelemente so eingestellt, daß die Filterschichten bzw. Filterscheiben jeweils den zur einstrahlenden Sonne hin positionierten Low-E-Schichten nachgeordnet dem Raum zugewandt sind, so daß die in den Filterschichten induzierte Wärmeenergie vornehmlich raumwärts abstrahlen muß.

In der Sommerstellung sind hingegen die Schwenkelemente infolge Drehung um 180° um ihre Hochachsen so eingestellt, daß die Filterschichten bzw. Filterscheiben sich in einer der einstrahlenden Sonne zugewandten, den dann zum Raum weisenden Low-E-Schichten gegenüber zur Sonne hin vorgelagerten Position befinden. In dieser Einstellung wird die in den Filterscheiben induzierte Wärmeenergie vornehmlich nach außen abgestrahlt und zusätzlich auch konvektiv außenseitig abgeführt.

## Patentansprüche

1. Bauwerk mit einem zumindest teilweise von transparenten Hüllflächen umgebenen Raum, insbesondere Glasvorbau in Form eines Wintergartens, einer Sonnenveranda oder dergleichen,
dadurch gekennzeichnet,
daß die transparenten Hüllflächen mit vornehmlich die nicht sichtbaren spektralen Anteile einfallender Solarenergie selektiv absorbierenden und in langwellige Wärmestrahlung umwandelnden Filtern (22, 26, 32, 38, 41, 46) ausgerüstet sind, welche die sichtbaren Anteile der Solarstrahlung weitgehend ungehindert passieren lassen.

2. Bauwerk nach Anspruch 1, dadurch gekennzeichnet, daß die transparenten Hüllflächen auf der nach außen weisenden Seite mit einer die Emission von Wärmestrahlung mindernden Schicht (23, 27, 33, 39, 44, 49) ausgerüstet sind.

3. Bauwerk nach Anspruch 2, dadurch gekennzeichnet, daß es sich bei der die Emission von Wärmestrahlung mindernden Schicht (23, 27, 33, 39, 44, 49) um eine Zinnoxidschicht handelt, die pyrolytisch auf die transparenten Hüllflächen aufgebracht ist.

4. Bauwerk nach einem der Ansprüche 1 bis 3, dadurch gekennzeichnet, daß es sich bei den absorptiven Filtern um Scheiben (22, 26, 41, 46) aus Glas oder Kunststoff handelt, die im Kern eingefärbt sind und von den sichtbaren Anteilen der Solarenergie im wesentlichen ungehindert durchstrahlt werden.

5. Bauwerk nach einem der Ansprüche 1 bis 3, dadurch gekennzeichnet, daß es sich bei den absorptiven Filtern um selektiv wirkende Beschichtungen (22, 32, 38) aus anorganischen oder organischen Materialien handelt, die auf den zum umschlossenen Raum hinweisenden Seiten der transparenten Hüllflächen aufgebracht sind.

6. Bauwerk nach einem der Ansprüche 1 bis 5, dadurch gekennzeichnet, daß die transparenten Hüllflächen als Verbundelemente (35, 40) mit wenigstens zwei mittels einer Klebefolie (38, 42) flächenhaft miteinander verbundenen Scheiben (36, 37; 41, 43) ausgebildet sind.

7. Bauwerk nach Anspruch 6, dadurch gekennzeichnet, daß eine der Scheiben als absorptiv wirkende Filterplatte (41) ausgebildet und die andere Scheibe (43) auf der von der Filterplatte abgewandten Seite mit der die Emission von Wärmestrahlung mindernden Schicht (44) ausgerüstet ist.

8. Bauwerk nach Anspruch 6, dadurch gekennzeichnet, daß die Klebeschicht (38) zwischen den beiden Scheiben als selektive, im nicht sichtbaren Bereich der Sonnenstrahlung absorbierende Filterschicht ausgebildet ist.

9. Bauwerk nach Anspruch 8, dadurch gekennzeichnet, daß die Klebeschicht als Klebefolie (38) ausgebildet ist und daß in letztere selektiv absorptive anorganische oder organische Pigmente eingebettet sind.

10. Bauwerk nach Anspruch 8, dadurch gekennzeichnet, daß es sich bei der Klebeschicht um einen Folienverbund (38) mit einer einliegenden, eigebettete anorganische oder organische Pigmente enthaltenden Filterfolie handelt.

11. Bauwerk nach einem der Ansprüche 1 bis 10, dadurch gekennzeichnet, daß die transparenten Hüllflächen aus hochwärmedämmenden Zwei- oder Mehrscheiben-Isolierglaselementen (45) bestehen.

12. Bauwerk nach Anspruch 11, dadurch gekennzeichnet, daß die zu dem umschlossenen Raum hinweisenden Scheiben als absorptive Filterplatten (46) ausgebildet sind, wahrend die anderen Scheiben (47) aus für Sonnenstrahlen hochtransparentem Material bestehen.

13. Bauwerk nach Anspruch 12, dadurch gekennzeichnet, daß es sich bei der Ausbildung der Scheiben (47) aus für Sonnenstrahlen hochtransparenten Materialien als Glasscheiben um Scheiben aus Weißglas handelt.

14. Bauwerk nach einem der Ansprüche 1 bis 13, dadurch gekennzeichnet, daß die Hüllflächen vom Boden aufsteigend nach außen geneigt sind.

15. Bauwerk nach Anspruch 14, dadurch gekennzeichnet, daß die Hüllflächen gegenüber einer Vertikalen um einen Winkel kleiner als 30°, vorzugsweise zwischen 10° und 15°, geneigt sind.

16. Bauwerk nach einem der Ansprüche 1 bis 15, dadurch gekennzeichnet, daß die transparenten Hüllflächen als Wendeelemente (18) ausgebildet und wahlweise mit ihrer einen oder anderen Seite zum umschlossenen Raum bzw. nach außen weisend einstellbar sind.
